# FASCICULE DE BREVET EUROPEEN

(11) **EP 1 364 288 B1**
(45) Date de publication et mention de la délivrance du brevet: **02.02.2011**
(21) Numéro de dépôt: 02704888.3
(22) Date de dépôt: 22.02.2002
(51) Int. Cl.: G06F 12/06, B60H 1/00

(54) **PROCEDE D'IDENTIFICATION DES NOEUDS D'UN RESEAU INFORMATIF DANS UNE INSTALLATION DE CLIMATISATION DE VEHICULE AUTOMOBILE**
VERFAHREN ZUR IDENTIFIKATION VON INFORMATIONSNETZWERKKNOTEN IN EINER KLIMAANLAGE EINES KRAFTFAHRZEUGS
METHOD FOR IDENTIFYING NODES IN A COMPUTER NETWORK IN A MOTOR VEHICLE AIR CONDITIONING INSTALLATION

(30) Priorité: 26.02.2001 FR 0102554
(43) Date de publication de la demande: 26.11.2003
(73) Titulaire: VALEO SYSTEMES THERMIQUES, 78320 Le Mesnil Saint-Denis (FR)
(72) Inventeur: BRUZY, Christophe, F-78650 Beynes (FR); AUBRY, Vincent, F-91400 Orsay (FR); PUZENAT, Bertrand, F-78180 Montigny le Bretonneux (FR); REDE, Laurent, F-75014 Paris (FR)
(74) Mandataire: Vieillevigne, Sébastien Nicolas Bernard
(86) Numéro de dépôt international: PCT/FR2002/000676
(87) Numéro de publication internationale: WO 2002/069149

(56) Documents cités:
- EP-A- 0 675 437
- EP-A- 0 843 260
- DE-C- 19 742 179
- FR-A- 2 788 146
- US-A- 5 689 675

## Description

### Arrière-plan de l'invention

La présente invention concerne l'identification des noeuds d'un réseau informatif dans une installation de climatisation de véhicule automobile.

L'application visée par l'invention est plus particulièrement l'affectation d'adresses à des périphériques montés sur les noeuds du réseau. L'invention est toutefois applicable également au contrôle de montage de périphériques munis d'adresses fixes particulières.

Les installations de climatisation de véhicules automobiles comprennent un certain nombre d'éléments tels que des actionneurs de volets de distribution ou de mixage d'air, des pulseurs, des capteurs de température. Ces éléments sont reliés à une unité centrale de commande pour recevoir des informations de commande et/ou lui transmettre des informations d'état.

La sophistication accrue des installations de climatisation se traduit par un nombre toujours plus élevé d'éléments les composant. Afin d'éviter la nécessité de volumineux et coûteux faisceaux conducteurs, il est connu de relier ces différents éléments à un réseau informatif (ou bus) connecté à l'unité centrale de commande et sur lequel transitent les informations de commande et les informations d'état.

Une programmation des adresses des éléments formant des périphériques du réseau informatif de l'installation de climatisation est alors nécessaire.

Il est connu de réaliser une programmation d'adresses de type matériel par codage physique réalisé dans le boîtier de chaque périphérique ou dans le connecteur reliant le périphérique au réseau informatif. Un tel adressage matériel présente l'inconvénient d'être figé. En outre, s'il est réalisé avant le montage des périphériques, il pose plusieurs problèmes :
- un problème de logistique puisqu'il est alors nécessaire de référencer de façon différente les différents périphériques alors qu'ils peuvent être identiques, hormis leur adresse, comme par exemple des actionneurs de volets, des pulseurs ou des capteurs,
- un problème de contrôle après montage pour détecter d'éventuelles erreurs de montage dues aux ressemblances entre périphériques d'un même type.

Il est également connu de réaliser une programmation d'adresses de type logiciel, après montage des périphériques sur le réseau informatif. Cette programmation est réalisée individuellement, à partir de l'unité centrale de commande et à travers le réseau, en accédant à chaque nouveau périphérique installé par son adresse qui, de façon habituelle, est initialement fixée à la valeur 0. Une telle programmation est relativement longue et conduit à affecter une adresse propre permanente à chaque périphérique. En outre, lors d'une réparation entraînant un remplacement d'un périphérique, une programmation d'adresse du nouveau périphérique est nécessaire.

Le document EP-A-0843260 révéle un procédé pour l'attribution automatique d'adresses d'étagères pour des étagères contenant des unités de disques, et un dispositif correspondant. Le procédé est basé sur la détection de la position de chaque étagère en propageant de module en module une tension progressivement croissante. Le dispositif comprend un convertisseur numértque-analogique et un convertisseur analogique-numérique avec un incrément numérique par un.

Le document US-A-5 689 675 révéle un procédé et dispositif pour la détection de la présence des modules en recherchant un nombre généré par choque module et en lui attribuant une adresse par un module maître. Le dispositif est utilisé dans un véhicule à moteur ou dans un appareil électroménager.

Le document FR-A-2 788 146 révélé un procédé et dispositif pour la configuration d' adressage des modules dans un système de climatisation des véhicules, à l'aide des slots codés.

### Objet et résumé de l'invention

L'invention a pour but la simplification et l'adaptation au domaine automobile d'un système d'allocation dynamique d'adresses à des éléments d'un réseau informatif.

Ce but est atteint avec le procédé défini par la revendication 1; et avec le dispositif défini par la revendication 17.

Plus particulièrement, Invention a pour but de fournir un procédé d'identification de noeuds de réseau Informatif d'une installation de climatisation de véhicule automobile comprenant une pluralité de périphériques connectés à des noeuds respectifs d'un réseau informatif relié à une unité centrale de commande, procédé permettant notamment d'éviter une différenciation permanente entre périphériques d'un même type, c'est-à-dire des périphériques de constitution similaire, assurant une même fonction (actionneur, pulser, capteur, par exemple).

Ainsi, un périphérique peut-il être simplement identifié par son emplacement par rapport aux autres périphériques sur le conducteur commun. En outre, chaque périphérique est muni d'un shunt qui assure la fonction de prélèvement du signal, tout en pouvant assurer une fonction de protection du périphérique vis-à-vis des surintensités.

Le conducteur commun peut être un conducteur reliant les périphériques à un potentiel de référence par exemple, la masse.

Le conducteur commun peut être le réseau informatif reliant les périphériques à l'unité centrale de commande.

La signature électrique injectée sur le conducteur commun peut être sous forme d'un courant d'Intensité constante ou d'une tension constante. L'information représentative de la position relative d'un périphérique est alors générée à partir de l'intensité du courant ou de la tension apparaissant sur le conducteur commun au niveau de ce périphérique.

D'autres formes de signatures électriques peuvent être utilisées, par exemple des formes d'ondes particulières, chaque périphérique étant muni de moyens appropriés de détection des signatures électriques utilisées.

Selon une particularité de l'invention, après injection des signatures électriques aux niveaux des périphériques, une trame d'informations est émise par l'unité centrale de commande sur le réseau informatif, la trame d'informations comprenant des informations de position relative de périphériques associées chacune à une information d'adresse respective, et chaque périphérique extrait de la trame d'informations émise l'information d'adresse associée à l'information de position relative correspondant à celle générée au niveau de ce périphérique.

L'information d'adresse d'un périphérique peut être générée directement à partir de la détection du courant ou tension apparaissant sur le conducteur commun au niveau de ce périphérique.

Dans le ces de l'application à la programmation d'adresses des noeuds du réseau, l'information d'adresse extraite au niveau d'un périphérique est mémorisée en tant qu'adresse du noeud de réseau auquel ce périphérique est connecté. On peut stocker l'information d'adresse de façon volatile de sorte que la programmation d'adresses est réinitialisée à chaque mise sous tension du dispositif de climatisation, et que les périphériques d'un mme type sont indifférenciés lorsque le dispositif de climatisation n'est pas sous tension. L'absence de différenciation des périphériques d'un mme type permet d'utiliser des périphériques identiques en évitant des inconvénients d'une multiplicité de références lors de l'approvisionnement et du stockage et les difficultés de distinguer entre périphériques semblables lors du montage.

Dans le cas de l'application au contrôle de montage de périphériques ayant des adresses particulières préenregistrées, l'information d'adresse extraite au niveau d'un périphérique est comparée à une information d'adresse stockée de façon permanente au niveau de ce périphérique.

### Brève description des dessins

D'autres particularités et avantages du procédé et du dispositif selon l'invention ressortiront à la lecture de la description faite ci-après, à titre indicatif mais non limitatif, en référence aux dessins annexés sur lesquels :
- la figure 1 est une vue partielle très schématique d'une installation de climatisation;
- la figure 2 est un schéma général d'un périphérique de l'installation de la figure 1;
- la figure 3 est une vue partielle très schématique d'une installation de climatisation conforme à l'invention;
- la figure 4 est un schéma général d'un périphérique de l'installation de la figure 3;
- la figure 5 est un schéma détaillé du circuit de détection de signatures électriques du périphérique de la figure 4 ;
- la figure 6 est un ordinogramme montrant le déroulement d'un procédé d'identification conforme à l'invention appliqué à l'affection d'adresses aux noeuds de réseau dans une installation telle qu'illustrée par la figure 3;
- la figure 7 illustre très schématiquement la variation d'intensité du courant dans le conducteur commun aux périphériques et à l'unité centrale de l'installation de la figure 3;
- la figure 8 est un ordinogramme montrant le déroulement d'un procédé d'identification conforme à l'invention appliqué à un contrôle de montage des périphériques dans une installation telle qu'illustrée par la figure 3;
- la figure 9 est un schéma détaillé d'une variante de réalisation d'un circuit de détection de signatures électriques dans un périphérique tel que celui de la figure 4;
- la figure 10 montre une variante de l'ordinogramme de la figure 6 ;
- la figure 11 est un schéma général d'une variante de réalisation d'un périphérique de l'installation de la figure 3 ;
- la figure 12 est une vue partielle très schématique d'un second mode de réalisation d'une installation de climatisation conforme à l'invention;
- la figure 13 est un ordinogramme montrant le déroulement d'un procédé d'identification conforme à l'invention appliqué à l'affection d'adresses aux noeuds de réseau dans une installation telle qu'illustrée par la figure 12;
- la figure 14 est une variante de la figure 13 ;
- la figure 15 est un ordinogramme montrant le déroulement d'un procédé d'identification conforme à l'invention appliqué à l'affection d'adresses aux noeuds de réseau dans une installation telle qu'illustrée par la figure 13;
- la figure 16 est une vue partielle très schématique d'un troisième mode de réalisation d'une installation de climatisation conforme à l'invention;
- la figure 17 est un schéma général d'un périphérique de l'installation de la figure 16;
- la figure 18 est un ordinogramme montrant le déroulement d'un procédé d'identification conforme à l'invention appliqué à l'affection d'adresses aux noeuds de réseau dans une installation telle qu'illustrée par la figure 17;
- les figures 19 et 20 sont des ordinogrammes montrant le déroulement d'un procédé d'identification conforme à l'invention appliqué à l'affection d'adresses aux noeuds de réseau dans une installation telle qu'illustrée par la figure 17;
- la figure 21 est une vue partielle très schématique d'un quatrième mode de réalisation d'une installation de climatisation conforme à l'invention; et
- la figure 22 est une variante de la figure 21.

### Description détaillée des modes de réalisation

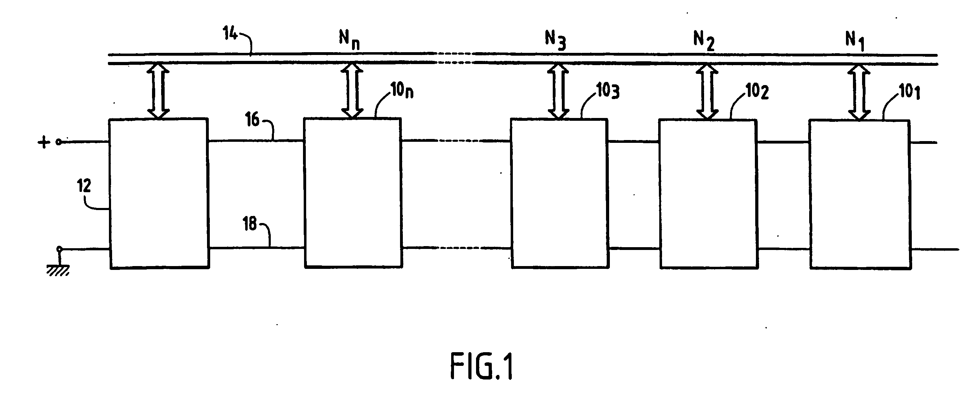

Comme le montre de façon très schématique la figure 1, une installation de climatisation de véhicule automobile comprend classiquement une pluralité de périphériques 10₁, 10₂, 10₃, ..., 10ₙ, une unité centrale de commande 12, ou maître de réseau, et un réseau informatif matérialisé par un bus d'informations 14. Les périphériques sont connectés à des noeuds respectifs N₁, N₂, N₃, ... Nₙ du réseau 14 par lequel ils sont reliés à l'unité centrale 12.

Les périphériques comprennent habituellement une pluralité d'actionneurs, pour commander les déplacements de volets de distribution et de mixage d'air, un ou plusieurs pulseurs (ventilateurs), un ou plusieurs capteurs constitués par des sondes de température et un panneau de contrôle. L'unité centrale de commande reçoit des informations d'état en provenance des périphériques et transmet à ceux-ci des informations de commande afin de réaliser les fonctions souhaitées de ventilation, réglages de température d'habitacle, désembuage, dégivrage, ... commandées à partir du panneau de contrôle.

Les périphériques ainsi que l'unité centrale de commande sont reliés à un conducteur commun d'alimentation en énergie 16 acheminant la tension de batterie du véhicule, ou une tension dérivée de celle-ci, et à un conducteur commun 18 relié à la masse (potentiel de référence) du véhicule.

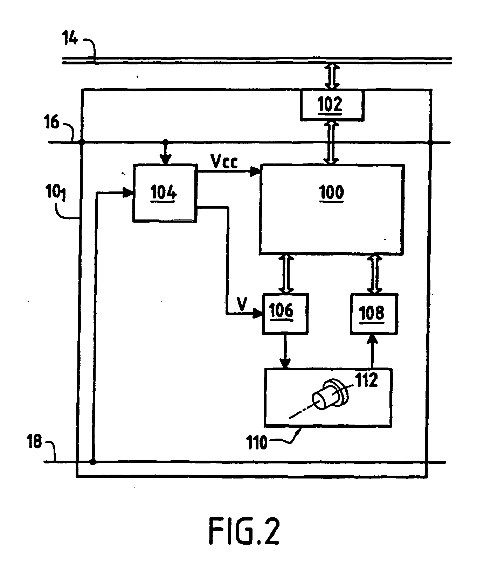

La figure 2 montre de façon plus détaillée le périphérique 10₁ de la figure 1, par exemple un actionneur de volet. Cet actionneur comprend un circuit de commande 100 à microprocesseur relié au réseau informatif 14 par une interface de bus 102. Un circuit d'alimentation électrique 104 relié aux conducteurs 16, 18 comprend des circuits de filtrage, protection et régulation de tension pour délivrer une tension logique d'alimentation V_{CC} au circuit de commande 100 et une tension d'alimentation moteur V à un circuit d'interface analogique 106.

Un motoréducteur 110 couplé à un volet de répartition ou de mixage d'air (non représenté) comprend un moteur pas à pas 112 qui reçoit de l'interface 106 la tension V sous forme de trains d'impulsions appliquées aux phases du moteur 112 à une fréquence de pilotage donnée, sous la commande de l'unité 100 à laquelle l'interface 106 est reliée.

Une interface de données 108 est reliée au motoréducteur 110 et au circuit de commande 100 pour transmettre à celui-ci des données d'état, notamment des données de position angulaire du volet.

Une installation de climatisation et un actionneur tels que brièvement décrits ci-avant sont bien connus de l'homme de l'art, de même que des périphériques assurant des fonctions de pulseur ou de capteur et comprenant chacun un circuit de commande à microprocesseur et un circuit d'alimentation électrique (individuel ou commun à plusieurs périphériques), de sorte qu'une description plus détaillée n'est pas nécessaire.

Conformément à l'invention, chaque périphérique est muni d'un circuit permettant d'injecter une signature électrique sur un conducteur commun, et de moyens permettant de détecter des signaux électriques dépendants des signatures électriques injectées et parcourant le conducteur commun au niveau de ce périphérique.

On notera qu'un signal ou signature électrique, peut être positif ou négatif. Le circuit d'injection est équivalent à un circuit électromoteur correspondant à un générateur de tension ou de courant dans le cas d'une injection de signature électrique positive et correspondant à un récepteur dans le cas d'une injection de signature électrique négative.

En outre, le conducteur commun, sur lequel une signature électrique est injectée, peut être le bus de donnée 14, le conducteur commun d'alimentation en énergie 16, le conducteur commun relié à la masse 18, ou un tout autre conducteur commun reliant en série les différents périphériques 10₁, 10₂, 10₃, ...,10ₙ, à l'unité centrale 12.

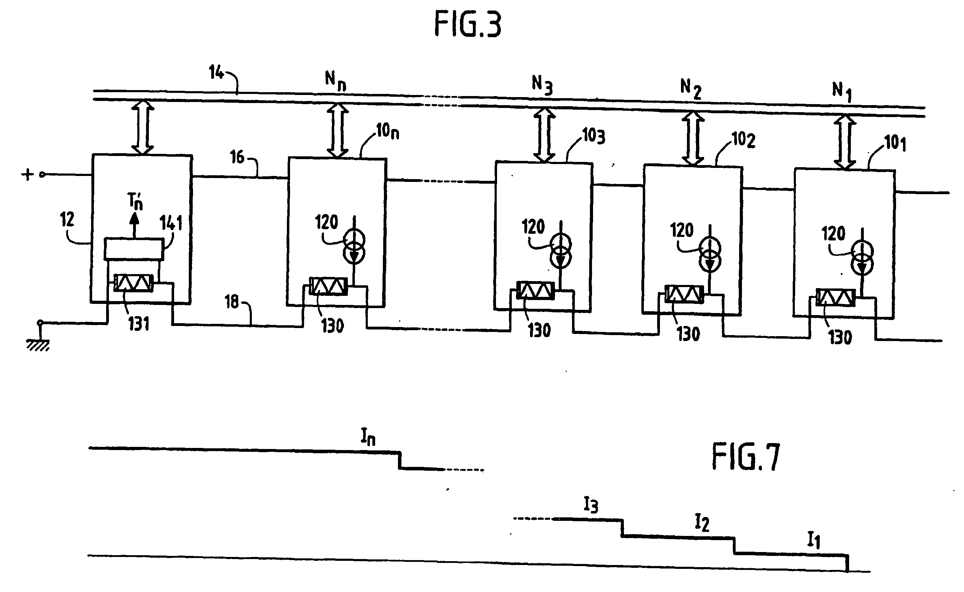

Dans le mode de réalisation de la figure 3, chaque périphérique 10₁, 10₂, 10₃, ... 10ₙ est muni d'un circuit permettant d'injecter une signature électrique sur le conducteur commun relié à la masse 18.

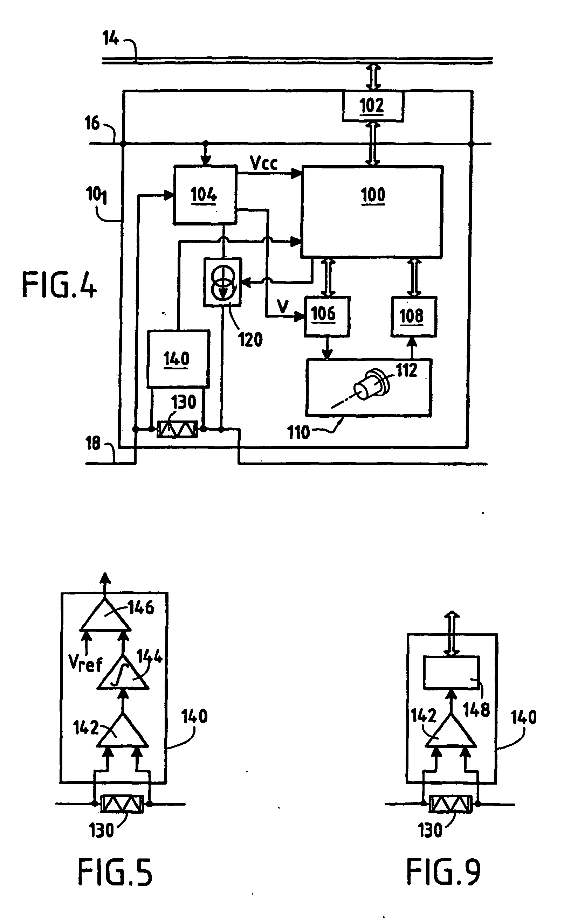

Dans l'exemple illustré par la figure 4, le circuit d'injection de signature électrique est constitué par une source de courant continu constant 120 connectée entre le circuit d'alimentation régulée 104 et le conducteur commun 18. En outre, un shunt 130 est inséré dans le conducteur commun 18 et un circuit 140 est connecté aux bornes du shunt 130 afin de fournir une information représentative de l'intensité du courant parcourant le shunt. Dans l'exemple des figures 3 et 4, l'injection de signature électrique au niveau du périphérique est réalisée en amont du shunt sur le conducteur commun 18, de sorte que le shunt d'un périphérique "voit" la signature électrique de celui-ci. Le terme "amont" est utilisé ici en référence au sens de circulation du courant sur le conducteur commun 18.

Ainsi, le périphérique 10₁ reçoit sa propre signature électrique seulement, le périphérique 10₂ reçoit la signature électrique des périphériques 10₁ et 10₂, le périphérique 10₃ celles des périphériques 10₁, 10₂ et 10₃, chaque périphérique recevant les signatures de ceux situés en amont sur le conducteur commun 18, en plus de sa signature, jusqu'au périphérique 10ₙ qui reçoit les signatures de tous les périphériques.

Un shunt ou résistance 131 est en outre inséré dans le conducteur commun 18, au niveau de l'unité centrale de commande 12 (figure 1). Un circuit 141, identique au circuit 140, est connecté aux bornes du shunt 131 afin de fournir une information représentative de l'intensité du courant parcourant le shunt 131, courant cumulant les signatures électriques de tous les périphériques 10₁, 10₂, 10₃, ...10ₙ.

On notera que les shunts 130, 131 constituent non seulement des éléments de mesure d'intensité mais aussi des organes de protection contre les surintensités. En cas de retrait d'un périphérique, la continuité du conducteur commun 18 peut être préservée par fermeture d'un interrupteur entre les bornes de raccordement du shunt sur le conducteur 18.

Un mode de réalisation d'un circuit de mesure d'intensité 140 est représenté sur la figure 5. La tension aux bornes du shunt 130 est amplifiée par un amplificateur 142 et intégrée au moyen d'un intégrateur 144 linéaire ou quasi-linéaire, de préférence. La charge en sortie de l'intégrateur est comparée à une valeur de seuil V_{ref} au moyen d'un comparateur 146 qui produit un signal lorsque la valeur de seuil est atteinte. Le signal produit par le comparateur est transmis au circuit de commande 100.

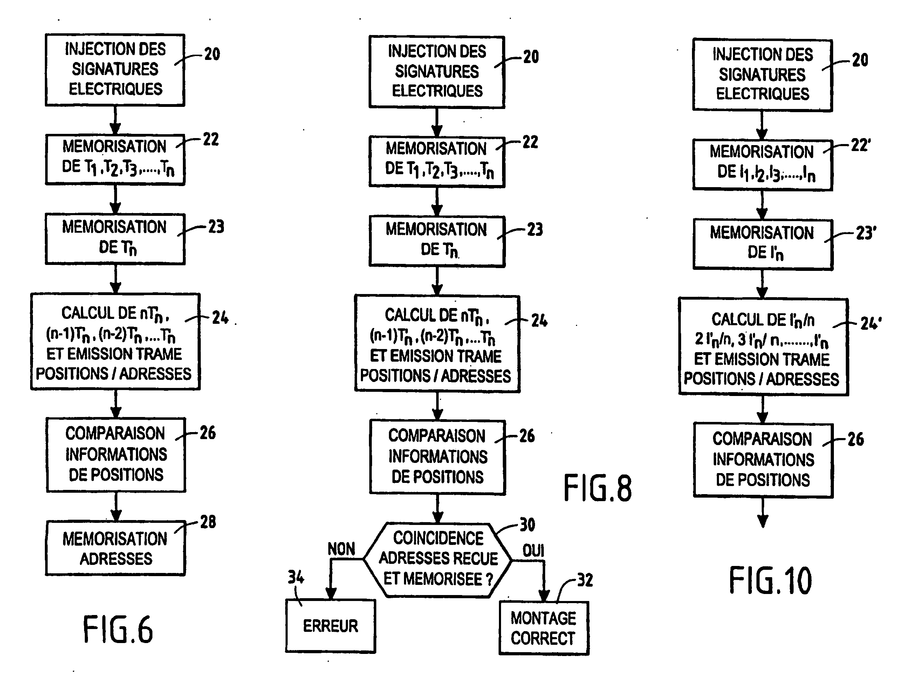

Un processus d'identification des périphériques 10₁ à 10ₙ sera maintenant décrit en référence à la figure 6 dans le cas de programmation d'adresses de périphériques montés dans l'installation de climatisation.

Le processus est mis en oeuvre au moyen de programmes stockés en mémoire de l'unité centrale de commande 12 et des circuits de commande 100 des périphériques.

A la mise sous tension de l'installation, le processus est démarré (étape 20) par commande d'injection de signatures électriques sur le conducteur commun 18. A cet effet, dans chaque périphérique, un signal de commande est délivré à l'instant tₒ par le circuit de commande 100 pour injecter un courant continu d'intensité I sur le conducteur 18. Le signal de commande est par exemple sous forme d'une impulsion de durée ΔT, appliquée sur un interrupteur statique commandant le fonctionnement de la source de courant ou inséré entre celle-ci et le conducteur 18. Les valeurs des intensités I injectées dans les différents périphériques sont égales ou sensiblement égales.

La figure 7 montre très schématiquement la distribution de l'intensité du courant le long du conducteur 18 en réponse à l'injection des signatures électriques de tous les périphériques.

Dans chaque circuit de commande, en réponse à la réception du signal de sortie du comparateur 136, le temps écoulé depuis l'instant tₒ est mémorisé dans une mémoire du circuit de commande 100 (étape 22). Les temps écoulés mémorisés T₁, T₂, T₃, ..., Tₙ dans les périphériques 10₁, 10₂, 10₃, ... 10ₙ sont inversement proportionnels aux intensités de courant mesurées respectives, I₁, I₂, I₃, ... Iₙ, l'intégration par l'intégrateur 144 aboutissant au seuil V_{ref} d'autant plus vite que l'intensité du courant est plus élevée. La durée ΔT est choisie de manière à être supérieure au temps T₁.

De façon similaire, en réponse à l'émission du signal de sortie du comparateur du circuit 141 le temps T'ₙ écoulé depuis l'instant tₒ est mémorisé dans une mémoire de l'unité centrale de commande 12 (étape 23). Le temps T'ₙ est normalement égal ou pratiquement égal au temps Tₙ.

A l'étape suivante 24, une trame d'informations est émise sur le réseau 14 par l'unité de commande comprenant des informations de positions relatives de périphériques associées à des informations d'adresses de périphériques. Le nombre n de périphériques étant connu, les informations de position sont calculées de la façon suivante : nT'ₙ, (n-1)T'ₙ, (n-2)Tₙ, ... T'ₙ et les informations d'adresses associées sont celles des périphériques qui doivent se situer respectivement aux emplacements des noeuds N₁, N₂, N₃, ... Nₙ du réseau informatif. Les valeurs nT'ₙ, (n-1)T'ₙ, (n-2)T'ₙ, ..., Tₙ doivent normalement être égales ou quasi-égales aux valeurs T₁, T₂, T₃, ..., Tₙ, respectivement.

On notera que, dans la mesure où les caractéristiques des sources de courant et circuit de détection des périphériques sont connues et prédéterminées, les valeurs T₁, T₂, T₃, ..., Tₙ le sont également, à une tolérance près, et peuvent être stockées dans l'unité centrale de commande. Il n'est alors pas nécessaire de prélever la valeur T'ₙ et de calculer les informations de position au niveau de l'unité centrale de commande.

A l'étape suivante (test 26), la trame émise par l'unité centrale de commande est reçue par les circuits de commande 100 des périphériques et les informations de positions contenues dans la trame sont comparées avec celles mémorisées dans les circuits de commande.

Lorsque, dans un périphérique, une coïncidence est détectée, avec une tolérance prédéterminée, l'information d'adresse associée dans la trame avec l'information de position concernée est mémorisée dans une mémoire du circuit de commande 100 (étape 28).

L'information d'adresse mémorisée constitue l'adresse du noeud du réseau informatif sur lequel le périphérique est connecté, cette adresse étant, au niveau de l'unité centrale de commande, reconnue comme celle de la fonction particulière assurée par le périphérique.

Ainsi, l'invention est particulièrement avantageuse en ce qu'il suffit que les adresses des périphériques soient prédéfinies au niveau de l'unité centrale de commande 12 en rapport avec l'emplacement du périphérique dans l'installation de climatisation. Aucun stockage d'adresse dans un périphérique préalablement à son montage n'est nécessaire.

En outre, la programmation d'adresses est une opération automatique, rapide, qui peut sans inconvénient être réalisée à chaque mise sous tension de l'installation. Les adresses peuvent alors être stockées dans des mémoires volatiles des périphériques. Lorsque l'installation est hors tension, les périphériques ne comportent pas d'adresses, de sorte que les périphériques d'un même type ne sont pas différenciés. Il est alors possible, pour des périphériques d'un même type, d'utiliser des dispositifs identiques, ce qui simplifie considérablement le référencement de ces dispositifs pour approvisionnement et stockage, ainsi que les opérations de montage à la construction ou lors de la réparation des installations de climatisation.

Bien que le procédé d'identification conforme à l'invention trouve une application particulièrement avantageuse pour la programmation d'adresses, il peut également être appliqué au contrôle de périphériques montés avec leurs adresses mémorisées de façon matérielle ou logicielle.

Un tel processus de contrôle est illustré par la figure 8. Il se distingue de celui de la figure 6 en ce que, lorsqu'une coïncidence avec tolérance prédéterminée est détectée à l'étape 26 au niveau d'un périphérique, l'information d'adresse associée à l'information de position dans la trame reçue de l'unité centrale de commande est comparée à l'information d'adresse déjà mémorisée dans le périphérique (étape 30). Selon que le résultat de la comparaison est positif ou négatif, un message de montage correct (étape 32) ou d'erreur (étape 34) est émis depuis le périphérique vers l'unité centrale de commande.

La figure 9 illustre une variante de réalisation du circuit 140 (ou 141) de mesure de courant connecté aux bornes d'un shunt. Selon cette variante, la tension aux bornes du shunt, amplifiée par l'amplificateur 142 est transmise à un convertisseur analogique-numérique 148 qui fournit au circuit de commande 100 directement sous forme numérique une information directement représentative de l'intensité du courant dans le shunt.

Les processus des figures 6 et 8 peuvent être modifiés de la façon suivante (figure 10).

Immédiatement après le démarrage du processus d'identification (étape 20), les valeurs I₁, I₂, I₃, ..., Iₙ fournies par les convertisseurs 148 sont lues et mémorisées dans les circuits de commande (étape 22') et la valeur I'ₙ mesurée au moyen du circuit 141 de l'unité centrale de commande est mémorisée dans celle-ci (étape 23').

Les valeurs I₁, I₂, I₃, ..., Iₙ représentent les positions respectives des périphériques 10₁, 10₂, 10₃, ..., 10ₙ le long du conducteur commun. La valeur I'ₙ est normalement égale ou quasi-égales à Iₙ.

A l'étape suivante 24', les informations de position insérées dans la trame émise par l'unité centrale de commande sont calculées de la façon suivante : I'ₙ/n, 2I'ₙ/n, 3I'ₙ/n..., I'ₙ et sont associées aux informations d'adresses des noeuds N₁, N₂, N₃, ..., Nₙ. Les valeurs I'ₙ/n, 2I'ₙ/n, 3I'ₙ/n, ..., I'ₙ doivent normalement être égales à I₁, I₂, I₃, ..., Iₙ, respectivement.

Les étapes suivantes d'extraction, au niveau de chaque périphérique, de l'information d'adresse correspondant à sa position relative, et de stockage ou contrôle de l'information d'adresse sont semblables à celles des processus des figures 6 et 8.

On notera que, dans le mode de réalisation des figures 6 et 8, l'injection de courant continu sur le conducteur commun peut être réalisée de façon continue, pas seulement pendant un intervalle de temps prédéterminé après mise sous tension. La liaison de commande entre le circuit de commande d'un périphérique et la source de courant peut alors être omise.

Dans le mode de réalisation des figures 3 et 4, l'injection de signature électrique au niveau d'un périphérique est réalisée en amont du shunt.

En variante, cette injection peut être réalisée en aval du shunt en modifiant le point de raccordement de la source de courant 120 avec le conducteur commun 18.

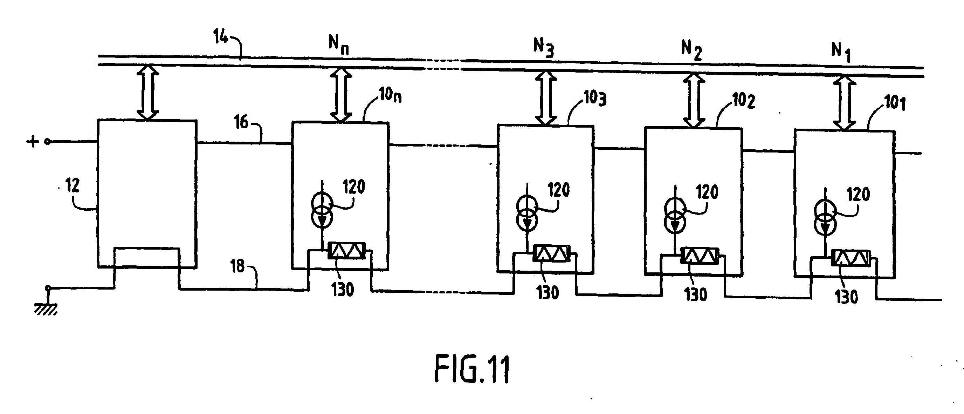

La figure 11 illustre un autre mode de réalisation selon l'invention. D'une manière similaire à ce qui est décrit plus haut, chaque périphérique 10₁, 10₂, 10₃, ... 10ₙ est muni d'un circuit permettant d'injecter une signature électrique sur le conducteur commun 18.

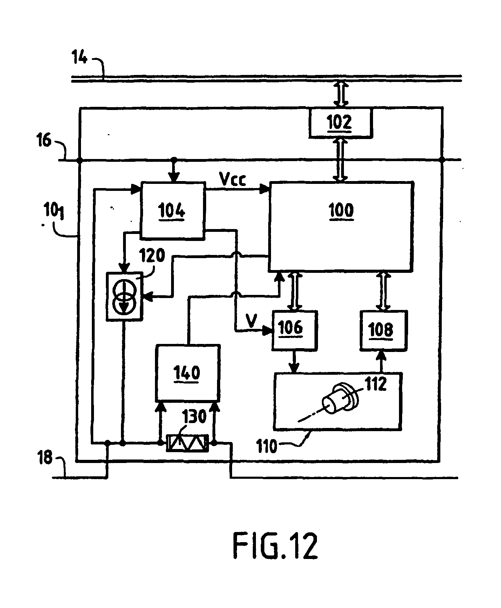

Dans l'exemple illustré par cette figure et détaillé à la figure 12, le circuit d'injection de signature électrique est constitué par une source de courant continu constant 120 disposée en aval du shunt 130 inséré dans le conducteur commun 18. Dans ce cas, un périphérique ne "voit" pas sa propre signature, mais seulement la somme de celles des périphériques situés en amont sur le conducteur 18. Le processus d'identification reste similaire à ce qui est décrit plus haut.

Le shunt 130 peut se trouver dans le périphérique ou dans le câblage connectant les différents périphériques entre eux.

En outre, un circuit 140 (figure 12) est connecté aux bornes du shunt 130 afin de fournir une information représentative de l'intensité du courant parcourant ce shunt.

Le mode de réalisation du circuit 140 est similaire à celui représenté sur la figure 9. Toutefois, la tension amplifiée par l'amplificateur peut être directement transmise au circuit de commande 100 en omettant le convertisseur analogique numérique.

On notera que, dans ce cas, une de deux connexions du shunt, appartenant au périphérique le plus éloigné du circuit de commande (en l'espèce le périphérique 10₁), est en l'air et par conséquent aucun courant ne circule dans ce shunt.

On notera aussi que, dans cet exemple, un courant est détecté sur un shunt uniquement si au moins l'une des sources de courant des périphériques situés en amont sur le conducteur commun, est activée. Le terme "amont" est toujours utilisé en référence au sens de circulation du courant sur le conducteur commun 18.

En revanche, dans ce mode de réalisation (figure 11), il n'est pas nécessaire d'insérer un shunt dans le conducteur commun 18, au niveau de l'unité centrale de commande 12.

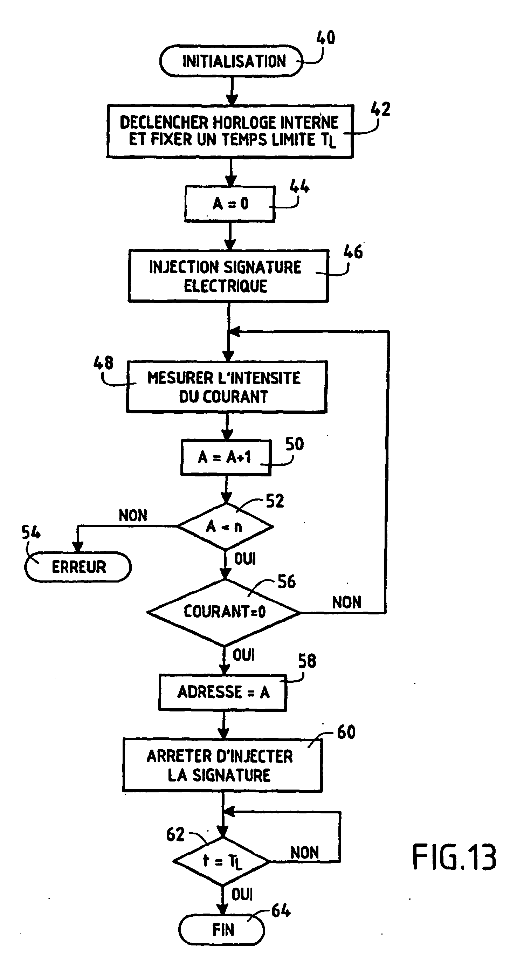

Un processus d'identification des périphériques 10₁ à 10ₙ sera maintenant décrit en référence à la figure 13 dans le cas de programmation d'adresses de périphériques montés dans l'installation de climatisation.

Le processus est toujours mis en oeuvre au moyen de programmes stockés en mémoire de l'unité centrale de commande 12 et des circuits de commande 100 des périphériques.

La figure 13, illustre ce processus pour un périphérique donné, sachant que les mêmes étapes se déroulent pour chaque périphérique.

A la mise sous tension de l'installation ou lors d'une initialisation ou réinitialisation 40, le processus est démarré lorsque le périphérique reçoit une trame d'adressage transmise par l'unité centrale de commande 12 via le bus de données 14.

La trame d'adressage déclenche alors une horloge interne dans le périphérique (étape 42) afin de cadencer, à l'aide de ses fronts, la succession d'actions ou de tests du processus d'adressage.

En effet, d'une manière connue, chaque périphérique peut comporter un oscillateur qui prend sa référence à partir des données de synchronisation comprises dans la trame d'adressage.

En outre, afin de ne pas perturber le processus d'adressage, le périphérique peut être rendu sourd aux données circulant dans le bus de données en désactivant, de manière connue, un composant électronique responsable de la réception-transmission des données entre le bus de données et le périphérique.

A l'étape 44, un compteur A stocké dans une mémoire du circuit de commande du périphérique est initialisé par la valeur zéro (A=0).

A l'étape suivante 46, une signature électrique est injectée sur le conducteur commun 18. A cet effet, dans chaque périphérique, un signal de commande est délivré par le circuit de commande 100 pour injecter un courant continu d'intensité I sur le conducteur 18 (figure 11). Les intensités I sont injectées quasiment dans le même temps dans les différents périphériques et leurs valeurs peuvent être égales ou sensiblement égales.

A titre d'exemple, pour un périphérique comprenant un moteur pas à pas 112 (figure 12), la source de courant peut être obtenue en créant un champ électrique constant au niveau du stator, sans permettre la rotation du moteur. Dans ce cas, il est possible d'utiliser un capteur à effet Hall, connu en soi, pour mesurer l'intensité du courant à travers le shunt.

A l'étape 48, l'intensité de courant passant à travers chaque shunt est mesurée au moyen des circuits 140 ( ou par un capteur à effet Hall).

En outre, dans une étape précédente à l'injection des courants, les circuits de mesure ou de détection 140 sont activés et l'intensité du courant à vide, due aux consommations parasites de courant ou à un défaut de décalage de circuits de mesures, est relevée.

Les différentes mesures peuvent être effectuées plusieurs fois, par exemple quatre fois, avant d'être moyennées. L'intensité du courant à vide peut alors être utilisée pour corriger la mesure de l'intensité de courant passant à travers le shunt.

Ensuite, l'adresse stockée dans la mémoire du circuit de commande du périphérique est incrémentée (A=A+1) à l'étape 50. Puis, la valeur A de l'adresse est comparée au nombre total n de périphériques à l'étape 52. A titre d'exemple n peut être égal ou inférieur à trente.

Dans le cas où la valeur A est supérieure au nombre n de périphériques, alors une erreur est signalée à l'étape 54. Dans le cas contraire, un test 56 est effectué afin de déterminer si l'intensité du courant dans le shunt n'est pas nulle (ou concrètement n'est pas inférieure à une valeur seuil minimale prédéterminée).

Dans l'affirmative, on revient à l'étape 48 pour mesurer à nouveau, l'intensité du courant.

Dans le cas contraire, c'est-à-dire, si l'intensité du courant dans le shunt est nulle (ou inférieure à une valeur seuil minimale), la valeur d'adresse A stockée dans la mémoire du circuit de commande du périphérique est finalement désignée comme adresse de ce périphérique (étape 58).

Ensuite l'injection du courant dans ce périphérique est arrêtée (étape 60) et le composant électronique responsable de la réception-transmission des données entre le bus de données et le périphérique est alors réactivé pour permettre le fonctionnement normal du système. Finalement, dès que le temps alloué pour l'adressage (étape 62) est épuisé alors, le processus est terminé (étape 64).

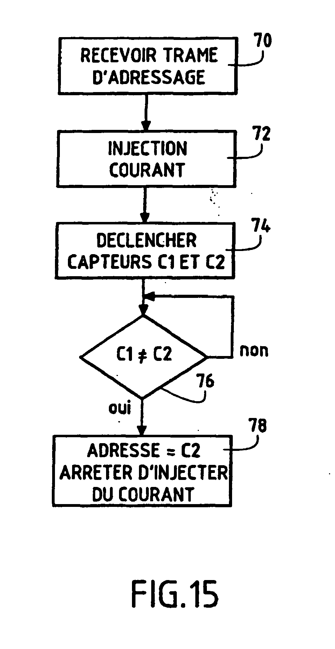

Le processus de la figure 13, peut être modifié de la façon illustrée par la figure 15, où aucune mesure de l'intensité du courant n'est nécessaire.

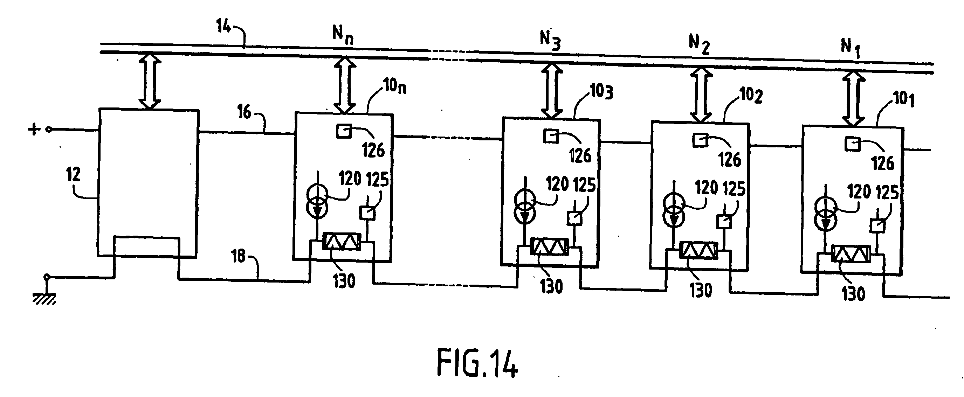

En effet, la figure 14 illustre très schématiquement une installation de climatisation semblable à la figure 12 mais comportant un premier compteur 125 qui est actif que s'il existe du courant à travers le shunt et un deuxième compteur 126 dont le fonctionnement ne dépend pas du courant à travers le shunt.

L'ordinogramme de la figure 15 montre qu'après la réception par le périphérique de la trame d'adressage émanant de l'unité centrale de commande (étape 70), un courant est injecté quasi simultanément dans chaque périphérique (étape 72).

Ensuite, deux horloges ou compteurs internes C1 et C2 sont déclenchés (étape 74). Le premier compteur C1 compte des unités de temps que si le shunt est parcouru par un courant, tandis que, le deuxième compteur C2 compte les mêmes unités du temps indépendamment du courant.

Dès que les deux compteurs n'ont pas la même valeur (test de l'étape 76), la valeur du deuxième compteur est stockée dans la mémoire du circuit de commande du périphérique comme étant son adresse et l'injection du courant est arrêtée (étape 78).

On notera, que selon les processus des figures 13 et 15, le périphérique qui ne détecte pas de courant (ou mesure un courant inférieur à une valeur minimale dans le cas de la figure 13) à travers son shunt, génère une adresse, indépendamment de l'état des autres périphériques.

Bien entendu, chaque périphérique ne détectera pas de courant (ou mesurera un courant inférieur à une valeur minimale) à un certain moment du processus d'adressage et d'une manière séquentielle dans le temps.

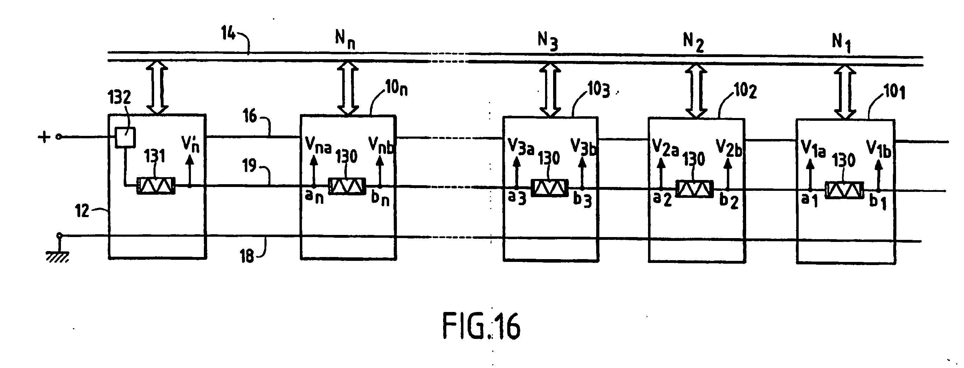

La figure 16 illustre un autre mode de réalisation selon l'invention. Dans cet exemple des shunts sont insérés dans un conducteur commun supplémentaire 19 reliant les périphériques à un potentiel de référence. Des signatures électriques sont injectées aux niveaux des périphériques sur le conducteur 19, par un circuit disposé dans l'unité centrale de commande 12 comportant un filtre 132 et une résistance 131.

En effet, une tension prélevée sur la ligne d'alimentation 16 est filtrée et stabilisée par le filtre 132 pour former avec la résistance 131 une source de tension où le potentiel à la sortie de la résistance est noté V'ₙ et où les potentiels aux bornes aᵢ, bᵢ de chaque résistance ou shunt 130 au niveau de chaque périphérique sont notés Vᵢa et Vᵢb, i étant un indice compris entre 1 et n.

On notera que dans ce cas, une des deux connexions du shunt, appartenant au périphérique le plus éloigné du circuit de commande 12 (plus précisément, la borne b₁ du shunt appartenant au périphérique 10₁), est connectée au conducteur commun 18 relié à la masse. Par conséquent, le potentiel V₁b sur la borne b₁ du shunt est égal à zéro (V₁b=0).

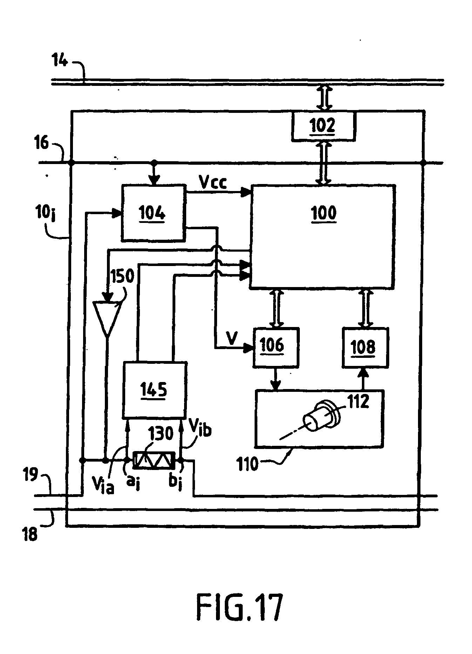

Dans l'exemple illustré par la figure 17, un circuit 145 (similaire à celui représenté à la figure 9) est connecté aux bornes du shunt 130 afin de fournir une information représentative des potentiels Vᵢa et Vᵢb aux bornes aᵢ, bᵢ de ce shunt.

En outre, un interrupteur ou circuit 150 de commande de fermeture à la masse est connecté entre le conducteur commun 19 au niveau de la borne aᵢ du shunt et le circuit de commande 100. Autrement dit, la fermeture de l'interrupteur 150 relie la borne aᵢ du shunt à la masse.

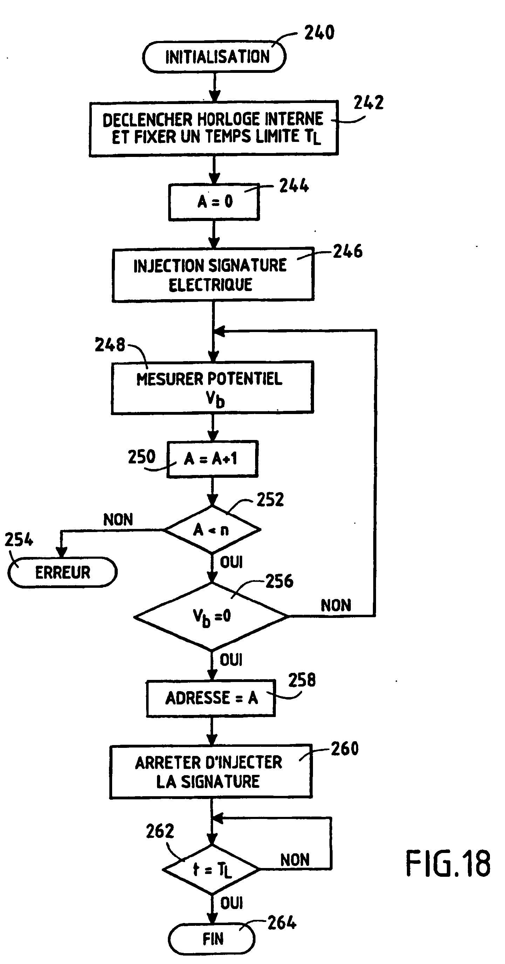

Un processus d'identification des périphériques 10₁ à 10ₙ est illustré à la figure 18, sachant que les mêmes étapes se déroulent pour chaque périphérique. Il se distingue de celui de la figure 13 de la façon suivante.

L'injection d'une signature électrique à l'étape 246 est réalisée par l'ouverture de l'interrupteur 150 (figure 17). Ainsi le potentiel Vᵢa en amont du shunt n'est pas nul.

A l'étape 248 le potentiel Vᵢb est mesuré ou détecté par le circuit 145 et dès que sa valeur est nulle (étape 256), l'adresse du périphérique est définie par la valeur du compteur A.

Ensuite, l'interrupteur est fermé (la borne aᵢ est reliée à la masse) afin d'arrêter d'injecter du potentiel au niveau de ce périphérique (étape 260).

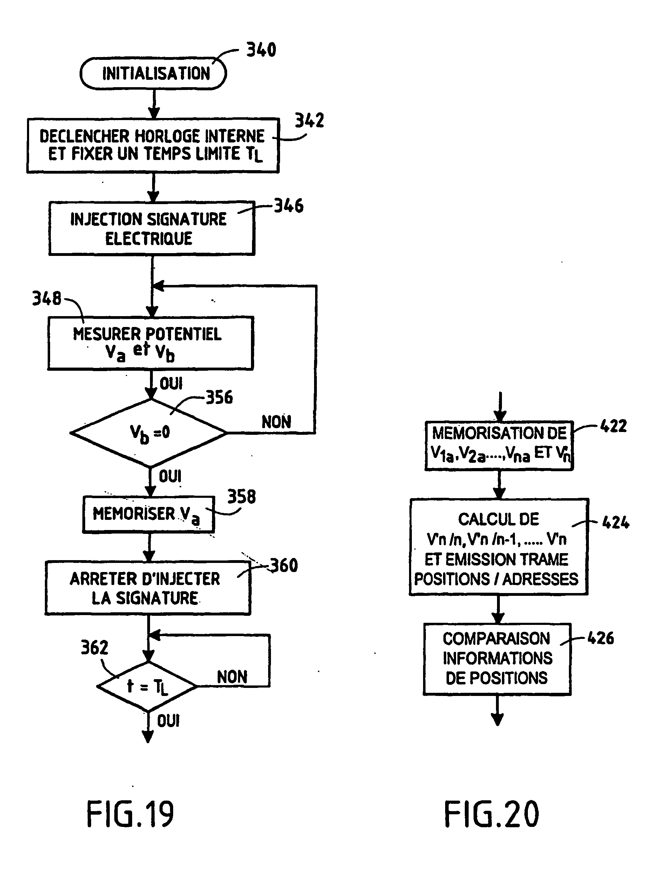

Le processus de la figure 18, peut par ailleurs, être modifié de la façon illustrée par les figures 19 et 20.

En effet, immédiatement après l'ouverture d'un interrupteur 150 (étape 346), les potentiels Vᵢa et Vᵢb aux bornes du shunt sont mesurés et si le potentiel Vᵢb est nul, la valeur du potentiel Vᵢa est mémorisée (étape 358) dans la mémoire du circuit de commande du périphérique avant de fermer l'interrupteur (étape 360).

Les valeurs V₁a, V₂a, ..., Vₙa sont alors mémorisées dans les circuits de commande des périphériques respectifs. La valeur Vₙ' mesurée au moyen d'un circuit (non représenté) de l'unité centrale de commande est mémorisée dans celle-ci (étape 422).

Les valeurs V₁a, V₂a, V₃a,...., Vₙa représentent les positions respectives des périphériques 10₁, 10₂, 10₃, ..., 10ₙ le long du conducteur commun 19.

Dans le cas où toutes les résistances 130 auraient la même valeur, alors d'après la règle de diviseur de tension, la valeur V₁a = nV₂a= (n-1)V₃a, ..., = Vₙa.

A l'étape suivante 424, les informations de position insérées dans la trame émise par l'unité centrale de commande sont calculées de la façon suivante : Vₙ'/n. Vₙ'/(n-1), 3Vₙ'/(n-2)..., Vₙ'^{,} et sont associées aux informations d'adresses des noeuds N₁, N₂, N₃, ..., Nₙ.

Les étapes suivantes d'extraction, au niveau de chaque périphérique, de l'information d'adresse correspondant à sa position relative, et de stockage ou contrôle de l'information d'adresse sont semblables à celles des processus des figures 6 et 8.

De même, un processus de contrôle de périphériques montés avec leurs adresses mémorisées de façon matérielle ou logicielle peut également être appliqué. Ce processus de contrôle est semblable à celui de la figure 10.

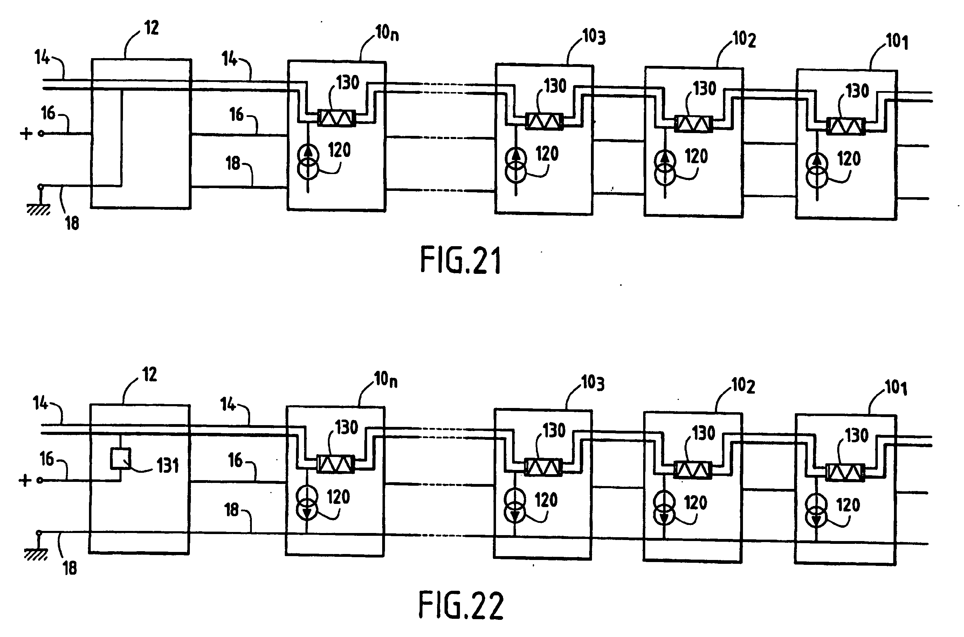

La figure 21, illustre un autre mode de réalisation selon l'invention. Chaque périphérique 10₁, 10₂, 10₃, ... 10ₙ est muni d'un circuit 120 permettant d'injecter une signature électrique sur le bus de donnée 14.

Le bus de donnée 14 est connecté au conducteur commun 18 relié à la masse.

Le circuit d'injection de signature électrique est constitué par une source de courant continu constant 120 en aval du shunt 130 et un circuit (non représenté) analogue au circuit 140 de la figure est connecté aux bornes du shunt 130 afin de fournir une information représentative de l'intensité du courant parcourant ce shunt.

La figure 22 est une variante de la figure 21, où le bus de donnée 14 est connecté par l'intermédiaire d'une résistance 131 au conducteur commun d'alimentation 16.

Dans ce cas, ce sont les noeuds ou périphériques qui tirent à la masse, par l'intermédiaire des circuits d'injections 120 ou interrupteurs contrôlés par des circuits de commande des périphériques. Dans cet exemple, le courant injecté au niveau du périphérique est un courant négatif et par conséquent, le sens de parcours est inversé par rapport au cas précédent.

Le processus d'identification pour les exemples illustrés par les figures 21 et 22 reste similaire à ce qui est décrit plus haut en référence à la figure 13.

Ainsi, une information représentative d'une position relative du périphérique associée à une information d'adresse est élaborée ou générée au niveau de chaque périphérique à partir d'une détection de courant parcourant le bus de donnée 14 au niveau de chaque périphérique.

De même, un processus d'identification analogue à ce qui est décrit plus haut en référence à la figure 15 reste valable en utilisant deux compteurs d'une manière similaire à la figure 14.

Enfin, bien que l'on ait envisagé plus haut l'injection de signatures électriques sous forme de courants d'intensité constante, d'autres possibilités de réalisation de signatures électriques sont envisageables, par exemple en utilisant diverses formes d'ondes.

## Revendications

1. Procédé d'identification de noeuds (N1, N2, N3,... Nn) de réseau informatif dans une installation de climatisation comprenant une pluralité de périphériques (101, 102, 103,..., 10n) reliés en série via un conducteur commun (14, 18, 18) et connectés à des noeuds respectifs d'un réseau informatif reliant les périphériques à une unité centrale de commande (12), **caractérisé en ce qu'**il comprend les étapes qui consistent à :
- injecter, au niveau de chaque périphérique, une signature électrique sur le conducteur commun (14 ; 16 ; 18),
- détecter, au niveau de chaque périphérique, un signal électrique dépendant des signatures électriques des périphériques situés en amont sur le conducteur commun (14 ; 16 ; 18), ledit signal est recueilli sur un shunt (130) inséré dans le conducteur commun (14 ; 18 ; 19) reliant les périphériques en série,
- générer, au niveau de chaque périphérique une information représentative d'une position relative du périphérique à partir du signal électrique détecté au niveau de ce périphérique, et
- identifier chaque noeud du réseau à partir de l'information de position relative recueillie par le périphérique connecté à ce noeud.

2. Procédé selon la revendication 1, **caractérisé en ce que**, le conducteur commun est un conducteur (18 ; 19) reliant les périphériques à un potentiel de référence.

3. Procédé selon la revendication 2, **caractérisé en ce que**, le potentiel de référence est un potentiel de masse.

4. Procédé selon la revendication 1, **caractérisé en ce que**, le conducteur commun est le réseau informatif (14) reliant les périphériques (101, 102,103,..., 10n) à l'unité centrale de commande (12).

5. Procédé selon l'une quelconque des revendications 1 à 4, **caractérisé en ce que** la signature électrique est injectée sur le conducteur commun (14 ; 18) par une source de courant (120) sous forme de courant d'intensité constante prédéterminée.

6. Procédé selon l'une quelconque des revendications 1 à 4, **caractérisé en ce que** la signature électrique est injectée sur le conducteur commun (19) par une source de tension sous forme de tension constante prédéterminée.

7. Procédé selon l'une quelconque des revendications 1 à 4, **caractérisé en ce que** la signature électrique est injectée sur le conducteur commun (14 ; 18 ; 19) par un générateur de signal de forme d'onde prédéterminée.

8. Procédé selon la revendication 5, **caractérisé en ce que** l'information représentative de la position relative d'un périphérique est générée à partir de la mesure de l'intensité du courant parcourant le conducteur commun (14 ; 18) au niveau de ce périphérique.

9. Procédé selon la revendication 6, **caractérisé en ce que** l'information représentative de la position relative d'un périphérique est générée à partir de la mesure d'une tension apparaissant sur le conducteur commun (19) au niveau de ce périphérique.

10. Procédé selon l'une quelconque des revendications 1 à 9, **caractérisé en ce que**, après injection des signatures électriques aux niveaux des périphériques, une trame d'informations est émise par l'unité centrale de commande (12) sur le réseau informatif (14), la trame d'informations comprenant des informations de position relative de périphériques associées chacune à une information d'adresse respective, et chaque périphérique extrait de la trame d'informations émise l'information d'adresse associée à l'information de position relative correspondant à celle générée au niveau de ce périphérique.

11. Procédé selon l'une quelconque des revendications 1 à 6, **caractérisé en ce qu'**une information d'adresse d'un périphérique est générée à partir de la détection du courant parcourant le conducteur commun (14 ; 18) au niveau de ce périphérique.

12. Procédé selon l'une quelconque des revendications 1 à 6, **caractérisé en ce qu'**une information d'adresse d'un périphérique est générée à partir de la détection d'une tension apparaissant sur le conducteur commun (19) au niveau de ce périphérique.

13. Procédé selon l'une quelconque des revendications 10 à 12, pour la programmation d'adresses des noeuds (N1, N2, N3,... Nn) du réseau, **caractérisé en ce que** l'information d'adresse extraite au niveau d'un périphérique est mémorisée en tant qu'adresse du noeud de réseau auquel ce périphérique est connecté.

14. Procédé selon la revendication 13, **caractérisé en ce que** l'information d'adresse est stockée de façon volatile de sorte que la programmation d'adresses est réinitialisée à chaque mise sous tension du dispositif de climatisation, et que les périphériques d'un même type sont indifférenciés lorsque le dispositif de climatisation n'est pas sous tension.

15. Procédé selon la revendication 10 pour le contrôle de montage de périphériques (101, 102, 103,..., 10n) sur les noeuds (N1, N2, N3,... Nn) du réseau informatif, **caractérisé en ce que** l'information d'adresse extraite au niveau d'un périphérique est comparée à une information d'adresse stockée de façon permanente au niveau de ce périphérique.

16. Procédé selon l'une quelconque des revendications 1 à 8, **caractérisé en ce qu'**une information représentative des signatures électriques des périphériques est générée et cette information est recueillie par l'unité centrale de commande (12).

17. Installation de climatisation de véhicule automobile comprenant une unité centrale de commande (12), un réseau informatif relié à l'unité centrale de commande (12) et une pluralité de périphériques (101, 102, 103,..., 10n) reliés à des noeuds (N1, N2, N3,... Nn) du réseau informatif, **caractérisée en ce que** les périphériques sont reliés en série via un conducteur commun (14 ; 18 ; 19), et l'installation comprend :
- des moyens pour injecter, au niveau de chaque périphérique, une signature électrique sur le conducteur commun (14 ;18 ; 19),
- des moyens pour détecter, au niveau de chaque périphérique, un signal électrique dépendant des signatures des périphériques situés en amont sur le conducteur commun (14 ; 1 8 ; 19), lesdits moyens pour détecter le signal électrigue sur le conducteur commun (14 ; 16 ; 18) comprennent un shunt (130) inséré dans le conducteur commun au niveau de chaque périphérique,
- des moyens pour générer, au niveau de chaque périphérique une information représentative d'une position relative du périphérique à partir du signal électrique détecté au niveau de ce périphérique, et
- des moyens pour identifier chaque noeud du réseau à partir de l'information de position relative recueillie par le périphérique connecté à ce noeud.

18. Installation selon la revendication 17, **caractérisé en ce que** le conducteur commun est un conducteur (18 ; 19) reliant les périphériques à un potentiel de référence.

19. Installation selon la revendication 18, **caractérisé en ce que** le potentiel de référence est un potentiel de masse.

20. Installation selon la revendication 17, **caractérisé en ce que** le conducteur commun est le réseau informatif (14) reliant les périphériques à l'unité centrale de commande (12).

21. Installation selon l'une quelconque des revendications 17 à 20, **caractérisé en ce que**, les moyens pour injecter une signature électrique comprennent une source de courant constant (120).

22. Installation selon la revendication 21, **caractérisé en ce que** les moyens pour générer une information représentative d'une position relative comprennent des moyens de mesure (140) de l'intensité du courant parcourant le conducteur commun (14 ; 18) au niveau de chaque périphérique.

23. Installation selon l'une quelconque des revendications 17 à 20, **caractérisé en ce que** les moyens pour injecter une signature électrique comprennent une source de tension constante.

24. Installation selon la revendication 23, **caractérisé en ce que** les moyens pour générer une information représentative d'une position relative comprennent des moyens de mesure (140) de tension sur le conducteur commun (19) au niveau de chaque périphérique.

25. Installation selon l'une quelconque des revendications 17 à 20, **caractérisé en ce que** les moyens pour injecter une signature électrique comprennent un générateur de signal de forme d'onde prédéterminée.

26. Installation selon l'une quelconque des revendications 17 à 24, **caractérisé en ce que** chaque périphérique comprend des moyens pour comparer l'information de position relative générée à partir de la détection du signal. électrique avec des informations de positions relatives transmises sur le réseau informatif (14) en association avec des informations d'adresses.

27. Installation selon la revendication 21, **caractérisé en ce que** les moyens pour générer une information représentative d'une position relative associée à une Information d'adresse comprennent des moyens de détection de l'intensité du courant parcourant le conducteur commun (14 ; 18) au niveau de chaque périphérique.

28. Installation selon la revendication 23, **caractérisé en ce que** les moyens pour générer une information représentative d'une position relative associée à une information d'adresse comprennent des moyens de détection d'une tension apparaissant sur le conducteur commun (19) au niveau de chaque périphérique.

29. Installation selon l'une quelconque des revendications 26 à 28, **caractérisé en ce que** chaque périphérique comprend des moyens pour enregistrer dans une mémoire d'adresse l'information d'adresse correspondante.

30. Installation selon la revendication 29, **caractérisé en ce que** la mémoire d'adresse est une mémoire volatile.

31. Installation selon l'une quelconque des revendications 26 à 28, **caractérisé en ce que** chaque périphérique comprend des moyens pour comparer l'information d'adresse associée à l'information de position relative correspondant à celle générée avec une information d'adresse préenregistrée.

## Claims

1. Method for identifying nodes (N1, N2, N3, ... Nn) of a computer network in an air-conditioning installation comprising a plurality of peripheral devices (101, 102, 103, ..., 10n) linked in series via a common conductor (14, 16, 18) and connected to respective nodes of a computer network linking the peripheral devices to a central control unit (12), **characterized in that** it comprises the steps that involve:
- injecting, at each peripheral device, an electrical signature onto the common conductor (14; 16; 18),
- detecting, at each peripheral device, an electrical signal dependent on the electrical signatures of the peripheral devices located upstream on the common conductor (14; 16; 18), said signal being collected on a shunt (130) inserted into the common conductor (14; 18; 19) linking the peripheral devices in series,
- generating, at each peripheral device, an information item representative of a relative position of the peripheral device from the electrical signal detected at this peripheral device, and
- identifying each node of the network from the relative position information item collected by the peripheral device connected to this node.

2. Method according to Claim 1, **characterized in that** the common conductor is a conductor (18; 19) linking the peripheral devices to a reference potential.

3. Method according to Claim 2, **characterized in that** the reference potential is a ground potential.

4. Method according to Claim 1, **characterized in that** the common conductor is the computer network (14) linking the peripheral devices (101, 102, 103, ..., 10n) to the central control unit (12).

5. Method according to any one of Claims 1 to 4, **characterized in that** the electrical signature is injected onto the common conductor (14; 18) by a current source (120) in the form of a current of predetermined constant intensity.

6. Method according to any one of Claims 1 to 4, **characterized in that** the electrical signature is injected onto the common conductor (19) by a voltage source in the form of a predetermined constant voltage.

7. Method according to any one of Claims 1 to 4, **characterized in that** the electrical signature is injected onto the common conductor (14; 18; 19) by a generator of a signal of predetermined waveform.

8. Method according to Claim 5, **characterized in that** the information item representative of the relative position of a peripheral device is generated from the measurement of the intensity of the current flowing through the common conductor (14; 18) at this peripheral device.

9. Method according to Claim 6, **characterized in that** the information item representative of the relative position of a peripheral device is generated from the measurement of a voltage appearing on the common conductor (19) at this peripheral device.

10. Method according to any one of Claims 1 to 9, **characterized in that**, after injection of the electrical signatures at the peripheral devices, an information frame is transmitted by the central control unit (12) over the computer network (14), the information frame containing relative position information for peripheral devices each associated with a respective address information item, and each peripheral device extracts from the transmitted information frame the address information item associated with the relative position information item corresponding to that generated at this peripheral device.

11. Method according to any one of Claims 1 to 6, **characterized in that** an address information item for a peripheral device is generated from the detection of the current flowing through the common conductor (14; 18) at this peripheral device.

12. Method according to any one of Claims 1 to 6, **characterized in that** an address information item for a peripheral device is generated from the detection of a voltage appearing on the common conductor (19) at this peripheral device.

13. Method according to any one of Claims 10 to 12, for programming addresses for the nodes (N1, N2, N3, ... Nn) of the network, **characterized in that** the address information item extracted at a peripheral device is stored as the address of the network node to which this peripheral device is connected.

14. Method according to Claim 13, **characterized in that** the address information item is stored in a volatile manner so that the address programming is reset each time the air-conditioning device is powered up, and the peripheral devices of one and the same type are undifferentiated when the air-conditioning device is not powered up.

15. Method according to Claim 10 for controlling the connection of peripheral devices (101, 102, 103, ..., 10n) to the nodes (N1, N2, N3, ... Nn) of the computer network, **characterized in that** the address information item extracted at a peripheral device is compared with an address information item permanently stored on this peripheral device.

16. Method according to any one of Claims 1 to 8, **characterized in that** an information item representative of the electrical signatures of the peripheral devices is generated and this information item is collected by the central control unit (12).

17. Motor vehicle air-conditioning installation comprising a central control unit (12), a computer network linked to the central control unit (12) and a plurality of peripheral devices (101, 102, 103, ..., 10n) linked to nodes (N1, N2, N3, ... Nn) of the computer network, **characterized in that** the peripheral devices are linked in series via a common conductor (14; 18; 19), and the installation comprises:
- means for injecting, at each peripheral device, an electrical signature onto the common conductor (14; 18; 19),
- means for detecting, at each peripheral device, an electrical signal dependent on the electrical signatures of the peripheral devices located upstream on the common conductor (14; 18; 19), said means for detecting the electrical signal on the common conductor (14; 16; 18) comprising a shunt (130) inserted into the common conductor at each peripheral device,
- means for generating, at each peripheral device, an information item representative of a relative position of the peripheral device from the electrical signal detected at this peripheral device, and
- means for identifying each node of the network from the relative position information item collected by the peripheral device connected to this node.

18. Installation according to Claim 17, **characterized in that** the common conductor is a conductor (18; 19) linking the peripheral devices to a reference potential.

19. Installation according to Claim 18, **characterized in that** the reference potential is a ground potential.

20. Installation according to Claim 17, **characterized in that** the common conductor is the computer network (14) linking the peripheral devices to the central control unit (12).

21. Installation according to any one of Claims 17 to 20, **characterized in that** the means for injecting an electrical signature comprise a constant current source (120).

22. Installation according to Claim 21, **characterized in that** the means for generating an information item representative of a relative position comprise means (140) for measuring the intensity of the current flowing through the common conductor (14; 18) at each peripheral device.

23. Installation according to any one of Claims 17 to 20, **characterized in that** the means for injecting an electrical signature comprise a constant voltage source.

24. Installation according to Claim 23, **characterized in that** the means for generating an information item representative of a relative position comprise means (140) for measuring the voltage on the common conductor (19) at each peripheral device.

25. Installation according to any one of Claims 17 to 20, **characterized in that** the means for injecting an electrical signature comprise a generator of a signal of predetermined waveform.

26. Installation according to any one of Claims 17 to 24, **characterized in that** each peripheral device comprises means for comparing the relative position information item generated from the detection of the electrical signal with relative position information items transmitted over the computer network (14) in association with address information items.

27. Installation according to Claim 21, **characterized in that** the means for generating an information item representative of a relative position associated with an address information item comprise means for detecting the intensity of the current flowing through the common conductor (14; 18) at each peripheral device.

28. Installation according to Claim 23, **characterized in that** the means for generating an information item representative of a relative position associated with an address information item comprise means for detecting a voltage appearing on the common conductor (19) at each peripheral device.

29. Installation according to any one of Claims 26 to 28, **characterized in that** each peripheral device comprises means for storing the corresponding address information item in an address memory.

30. Installation according to Claim 29, **characterized in that** the address memory is a volatile memory.

31. Installation according to any one of Claims 26 to 28, **characterized in that** each peripheral device comprises means for comparing the address information item associated with the relative position information item corresponding to that generated with a prestored address information item.

## Patentansprüche

1. Verfahren zur Identifikation von Informationsnetzwerk-Knoten (N1, N2, N3, ..., Nn) in einer Klimaanlage, die eine Vielzahl von Peripheriegeräten (101, 102, 103, ..., 10n) enthält, welche über einen gemeinsamen Leiter (14, 16, 18) in Reihe verbunden und an jeweilige Knoten eines Informationsnetzwerks angeschlossen sind, die die Peripheriegeräte mit einer zentralen Steuereinheit (12) verbinden, **dadurch gekennzeichnet, dass** es die Schritte enthält, die darin bestehen:
- auf der Ebene jedes Peripheriegeräts eine elektrische Unterschrift in den gemeinsamen Leiter (14; 16; 18) einzuspeisen,
- auf der Ebene jedes Peripheriegeräts ein elektrisches Signal zu erfassen, das von den elektrischen Unterschriften der Peripheriegeräte abhängt, die sich vorne auf dem gemeinsamen Leiter (14; 16; 18) befinden, wobei das Signal an einem Shunt (130) aufgefangen wird, der in den die Peripheriegeräte in Reihe verbindenden gemeinsamen Leiter (14; 18; 19) eingefügt ist,
- auf der Ebene jedes Peripheriegeräts eine für eine relative Position des Peripheriegeräts repräsentative Information ausgehend von dem auf der Ebene dieses Peripheriegeräts erfassten elektrischen Signal zu erzeugen; und
- jeden Knoten des Netzwerks ausgehend von der Information über die relative Position zu identifizieren, die von dem an diesen Knoten angeschlossenen Peripheriegerät aufgefangen wird.

2. Verfahren nach Anspruch 1, **dadurch gekennzeichnet, dass** der gemeinsame Leiter ein Leiter (18; 19) ist, der die Peripheriegeräte mit einem Bezugspotential verbindet.

3. Verfahren nach Anspruch 2, **dadurch gekennzeichnet, dass** das Bezugspotential ein Massepotential ist.

4. Verfahren nach Anspruch 1, **dadurch gekennzeichnet, dass** der gemeinsame Leiter das die Peripheriegeräte (101, 102, 103, ..., 10n) mit der zentralen Steuereinheit (12) verbindende Informationsnetzwerk (14) ist.

5. Verfahren nach einem der Ansprüche 1 bis 4, **dadurch gekennzeichnet, dass** die elektrische Unterschrift durch eine Stromquelle (120) in Form eines Stroms mit vorbestimmter konstanter Stärke in den gemeinsamen Leiter (14; 18) eingespeist wird.

6. Verfahren nach einem der Ansprüche 1 bis 4, **dadurch gekennzeichnet, dass** die elektrische Unterschrift durch eine Spannungsquelle in Form einer vorbestimmten konstanten Spannung in den gemeinsamen Leiter (19) eingespeist wird.

7. Verfahren nach einem der Ansprüche 1 bis 4, **dadurch gekennzeichnet, dass** die elektrische Unterschrift durch einen Generator eines Signals mit vorbestimmter Wellenform in den gemeinsamen Leiter (14; 18; 19) eingespeist wird.

8. Verfahren nach Anspruch 5, **dadurch gekennzeichnet, dass** die für die relative Position eines Peripheriegeräts repräsentative Information ausgehend von der Messung der Stärke des den gemeinsamen Leiter (14; 18) auf der Ebene dieses Peripheriegeräts durchfließenden Stroms erzeugt wird.

9. Verfahren nach Anspruch 6, **dadurch gekennzeichnet, dass** die für die relative Position eines Peripheriegeräts repräsentative Information ausgehend von der Messung einer Spannung erzeugt wird, die im gemeinsamen Leiter (19) auf der Ebene dieses Peripheriegeräts auftritt.

10. Verfahren nach einem der Ansprüche 1 bis 9, **dadurch gekennzeichnet, dass** nach Einspeisen der elektrischen Unterschriften auf den Ebenen der Peripheriegeräte eine Informationsfolge von der zentralen Steuereinheit (12) im Informationsnetzwerk (14) gesendet wird, wobei die Informationsfolge Informationen über die relative Position von Peripheriegeräten enthält, die je einer jeweiligen Adresseninformation zugeordnet sind, und jedes Peripheriegerät aus der gesendeten Informationsfolge die Adresseninformation entnimmt, die der Information über die relative Position zugeordnet ist, die derjenigen entspricht, die auf der Ebene dieses Peripheriegeräts erzeugt wird.

11. Verfahren nach einem der Ansprüche 1 bis 6, **dadurch gekennzeichnet, dass** eine Adresseninformation eines Peripheriegeräts ausgehend von der Erfassung des den gemeinsamen Leiter (14; 18) auf der Ebene dieses Peripheriegeräts durchfließenden Stroms erzeugt wird.

12. Verfahren nach einem der Ansprüche 1 bis 6, **dadurch gekennzeichnet, dass** eine Adresseninformation eines Peripheriegeräts ausgehend von der Erfassung einer Spannung erzeugt wird, die im gemeinsamen Leiter (19) auf der Ebene dieses Peripheriegeräts auftritt.

13. Verfahren nach einem der Ansprüche 10 bis 12 für die Adressenprogrammierung der Knoten (N1, N2, N3, ..., Nn) des Netzwerks, **dadurch gekennzeichnet, dass** die auf der Ebene eines Peripheriegeräts entnommene Adresseninformation als Adresse des Netzknotens gespeichert wird, an den dieses Peripheriegerät angeschlossen ist.

14. Verfahren nach Anspruch 13, **dadurch gekennzeichnet, dass** die Adresseninformation flüchtig gespeichert wird, so dass die Adressenprogrammierung bei jedem Einschalten der Klimavorrichtung neu initialisiert wird, und dass die Peripheriegeräte des gleichen Typs unterschiedslos sind, wenn die Klimavorrichtung nicht eingeschaltet ist.

15. Verfahren nach Anspruch 10 zur Überwachung der Montage von Peripheriegeräten (101, 102, 103, ..., 10n) an den Knoten (N1, N2, N3, ..., Nn) des Informationsnetzwerks, **dadurch gekennzeichnet, dass** die auf der Ebene eines Peripheriegeräts entnommene Adresseninformation mit einer permanent auf der Ebene dieses Peripheriegeräts gespeicherten Adresseninformation verglichen wird.

16. Verfahren nach einem der Ansprüche 1 bis 8, **dadurch gekennzeichnet, dass** eine für die elektrischen Unterschriften der Peripheriegeräte repräsentative Information erzeugt und diese Information von der zentralen Steuereinheit (12) aufgefangen wird.

17. Kraftfahrzeug-Klimaanlage, die eine zentrale Steuereinheit (12), ein mit der zentralen Steuereinheit (12) verbundenes Informationsnetzwerk und eine Vielzahl von Peripheriegeräten (101, 102, 103, ..., 10n) enthält, die mit Knoten (N1, N2, N3, ..., Nn) des Informationsnetzwerkes verbunden sind, **dadurch gekennzeichnet, dass** die Peripheriegeräte über einen gemeinsamen Leiter (14; 18; 19) in Reihe verbunden sind, und die Anlage enthält:
- Einrichtungen, um auf der Ebene jedes Peripheriegeräts eine elektrische Unterschrift in den gemeinsamen Leiter (14; 18; 19) einzuspeisen,
- Einrichtungen, um auf der Ebene jedes Peripheriegeräts ein elektrisches Signal zu erfassen, das von den elektrischen Unterschriften der Peripheriegeräte abhängt, die sich vorne auf dem gemeinsamen Leiter (14; 18; 19) befinden, wobei die Einrichtungen zur Erfassung des elektrischen Signals im gemeinsamen Leiter (14; 16; 18) einen Shunt (130) enthalten, der in den gemeinsamen Leiter auf der Ebene jedes Peripheriegeräts eingefügt ist,
- Einrichtungen, um auf der Ebene jedes Peripheriegeräts eine für eine relative Position des Peripheriegeräts repräsentative Information ausgehend von dem elektrischen Signal zu erzeugen, das auf der Ebene dieses Peripheriegeräts erfasst wird, und
- Einrichtungen, um jeden Knoten des Netzwerks ausgehend von der Information über die relative Position zu identifizieren, die von dem an diesen Knoten angeschlossenen Peripheriegerät aufgefangen wird.

18. Anlage nach Anspruch 17, **dadurch gekennzeichnet, dass** der gemeinsame Leiter ein Leiter (18; 19) ist, der die Peripheriegeräte mit einem Bezugspotential verbindet.

19. Anlage nach Anspruch 18, **dadurch gekennzeichnet, dass** das Bezugspotential ein Massepotential ist.

20. Anlage nach Anspruch 17, **dadurch gekennzeichnet, dass** der gemeinsame Leiter das Informationsnetzwerk (14) ist, das die Peripheriegeräte mit der zentralen Steuereinheit (12) verbindet.

21. Anlage nach einem der Ansprüche 17 bis 20, **dadurch gekennzeichnet, dass** die Einrichtungen zum Einspeisen einer elektrischen Unterschrift eine Konstantstromquelle (120) enthalten.

22. Anlage nach Anspruch 21, **dadurch gekennzeichnet, dass** die Einrichtungen zur Erzeugung einer für eine relative Position repräsentativen Information Einrichtungen zum Messen (140) der Stärke des Stroms enthalten, der den gemeinsame Leiter (14; 18) auf der Ebene jedes Peripheriegerät durchfließt.

23. Anlage nach einem der Ansprüche 17 bis 20, **dadurch gekennzeichnet, dass** die Einrichtungen zum Einspeisen einer elektrischen Unterschrift eine Konstantspannungsquelle enthalten.

24. Anlage nach Anspruch 23, **dadurch gekennzeichnet, dass** die Einrichtungen zur Erzeugung einer für eine relative Position repräsentativen Information Einrichtungen zum Messen (140) der Spannung im gemeinsamen Leiter (19) auf der Ebene jedes Peripheriegeräts enthalten.

25. Anlage nach einem der Ansprüche 17 bis 20, **dadurch gekennzeichnet, dass** die Einrichtungen zum Einspeisen einer elektrischen Unterschrift einen Generator eines Signals mit vorbestimmter Wellenform enthalten.

26. Anlage nach einem der Ansprüche 17 bis 24, **dadurch gekennzeichnet, dass** jedes Peripheriegerät Einrichtungen enthält, um die Information über eine relative Position, die ausgehend von der Erfassung des elektrischen Signals erzeugt wird, mit Informationen über relative Positionen zu vergleichen, die im Informationsnetzwerk (14) zusammen mit Adresseninformationen übertragen werden.

27. Anlage nach Anspruch 21, **dadurch gekennzeichnet, dass** die Einrichtungen zur Erzeugung einer Information, die für eine einer Adresseninformation zugeordnete relative Position repräsentativ ist, Einrichtungen zur Erfassung der Stärke des Stroms enthalten, der den gemeinsamen Leiter (14; 18) auf der Ebene jedes Peripheriegeräts durchfließt.

28. Anlage nach Anspruch 23, **dadurch gekennzeichnet, dass** die Einrichtungen zur Erzeugung einer Information, die für eine einer Adresseninformation zugeordnete relative Position repräsentativ ist, Einrichtungen zur Erfassung einer Spannung enthalten, die im gemeinsamen Leiter (19) auf der Ebene jedes Peripheriegeräts auftritt.

29. Anlage nach einem der Ansprüche 26 bis 28, **dadurch gekennzeichnet, dass** jedes Peripheriegerät Einrichtungen enthält, um die entsprechende Adresseninformation in einem Adressenspeicher aufzuzeichnen.

30. Anlage nach Anspruch 29, **dadurch gekennzeichnet, dass** der Adressenspeicher ein flüchtiger Speicher ist.

31. Anlage nach einem der Ansprüche 26 bis 28, **dadurch gekennzeichnet, dass** jedes Peripheriegerät Einrichtungen enthält, um die Adresseninformation, die der Information über die relative Position zugeordnet ist, die der erzeugten entspricht, mit einer vorab aufgezeichneten Adresseninformation zu vergleichen.
